# EUROPEAN PATENT SPECIFICATION

(11) **EP 2 812 742 B1**
(45) Date of publication and mention of the grant of the patent: **30.11.2016**
(21) Application number: 13713229.6
(22) Date of filing: 29.01.2013
(51) Int. Cl.: G02B 6/38, G02B 6/255

(54) **FIBER OPTIC CONNECTOR**
FASEROPTISCHER VERBINDER
CONNECTEUR DE FIBRES OPTIQUES

(30) Priority: 09.02.2012 CN 201220041199 U
(43) Date of publication of application: 17.12.2014
(73) Proprietor: Tyco Electronics (Shanghai) Co., Ltd., Shanghai 200131 (CN)
(72) Inventor: WEN, Liang, Shanghai 200233 (CN)
(74) Representative: Grünecker Patent- und Rechtsanwälte PartG mbB
(86) International application number: PCT/IB2013/050749
(87) International publication number: WO 2013/118025

(56) References cited:
- WO-A1-2009/148797
- WO-A1-2011/025637
- WO-A2-2011/031107
- KR-A-2010-0 078 242

## Description

### CROSS-REFERENCE TO RELATED APPLICATION

This application claims the benefit of Chinese Patent Application No. 201220041199.9 filed on February 9, 2012 in the State Intellectual Property Office of China, the whole disclosure of which is incorporated herein by reference.

### BACKGROUND OF THE INVENTION

### Field of the Invention

The present invention relates to a fiber optic connector, more particularly, relates to a fiber optic connector that can be assembled in the field.

### Description of the Related Art

The fiber optic connector is a necessary device in a fiber communication system. With the development of a local fiber communication network, more particularly, for meeting requirements of fiber to the network (FTTN) and fiber to the home (FTTH), the demand on the fiber optic connector is rapidly increasing. The conventional manufacture technology of the fiber optic connector, for example, assembling and polishing in a factory, cannot satisfy with such demand any longer, and has a disadvantage of high cost. Accordingly, there is a great demand on a fiber optic connector that is adapted to be quickly and simply assembled in the field.

The field-assembled fiber optic connector possess advantages, such as time-saving, labor-saving, and facilitating operation. Most of all, a reliable fiber optic connector should be able to be quickly and simply assembled in a few minutes. The field-assembled fiber optic connector mainly comprises a fiber splicing unit for splicing fibers and a fiber fixing unit fixed with the fiber splicing unit. Generally, splicing fibers comprises the following steps of: peeling off a length of the protection layer of a fiber cable to expose a length of bared fiber to be spliced; inserting the bared fiber into the fiber splicing unit through the fiber fixing unit to abut against another fiber pre-embedded in the fiber splicing unit. In the step of splicing fibers, the bared fiber is pushed forward so that the bared fiber is slightly bent inside the fiber fixing unit to ensure fibers to be spliced well, and then the fiber cable having the protection layer is temporarily fixed on the fiber fixing unit. At this time, the fiber splicing unit presses the abutted fibers to accomplish the splicing operation. Afterward, the fiber cable temporarily fixed on the fiber fixing unit is loosened so that the bent bared fiber is restored to a straight line state. At last, a fiber boot is fixed on the fiber fixing unit to fix the fiber cable on the fiber optic connector.

The conventional fiber optic connectors comprises a fiber splicing unit and a fiber cable clamp unit having two separate legs for clamping the fiber. Examples for these conventional fiber optic connectors are described, for example, in KR 10 2010 0078242 A, WO 2009/148797 A1 and WO 2011/031107 A2. These documents describe fiber optic connectors having two or more separate legs for clamping the fiber. During splicing fibers to be spliced, it is very difficult for the operator to hold the fiber steadily using the two legs until the fiber splicing process is finished. Also, it is difficult for the operator to pinch the two legs and sleeve a fiber boot onto the fiber cable clamp unit by hand. Such configured fiber cable clamp unit is not user-friendly, it is very inconvenient for assembling the fiber optic connector.

### SUMMARY OF THE INVENTION

The present invention has been made to provide a user-friendly fiber optic connector that is adapted to be quickly and simply assembled in the field.

According to an aspect of the present invention, there is provided a fiber optic connector comprising a fiber splicing unit, a fiber fixing unit and a fiber boot, wherein the fiber fixing unit has a fiber boot fixing portion by which the fiber fixing unit is coupled to the fiber boot, a first end of the fiber fixing unit is connected with the fiber splicing unit, a second end of the fiber fixing unit is provided with a groove for receiving a fiber cable to be
spliced, and a fiber cable fixing portion for fixing the fiber cable is provided on the groove, wherein the fiber cable fixing portion comprises elastic portions provided at both sides of the groove, wherein the elastic portions are deformable towards inside of the groove by an external force so as to press the fiber cable, and wherein a window is formed in each of opposite sides of the groove for accommodating the elastic portion, and wherein the elastic portion is configured to be an elastic sheet extending from one side towards the other side of the window.

According to another exemplary embodiment of the present invention, a protrusion is formed on an outer surface of the elastic portion.

According to another exemplary embodiment of the present invention, an outer diameter of at least a part of the protrusion is larger than an inner diameter of the fiber boot.

According to another exemplary embodiment of the present invention, the elastic sheet is integrally formed with the rest of the fiber fixing unit.

According to another exemplary embodiment of the present invention, the elastic sheet is configured to be an elongated piece having a free end on which a protrusion is formed.

According to another exemplary embodiment of the present invention, the protrusion has a trapezoid cross section in a horizontal direction, and a bevel edge of the protrusion is formed as a guide face for guiding the fiber boot to slide through it and be coupled onto the fiber fixing unit.

According to another exemplary embodiment of the present invention, the fiber fixing portion comprises a plurality of embossments protruded from an inner wall of the groove toward inside of the groove.

According to another exemplary embodiment of the present invention, the plurality of embossments are arranged in tooth form.

According to another exemplary embodiment of the present invention, the groove has a flat bottom.

According to another exemplary embodiment of the present invention, a bottom of the groove has a radial cross section with a semicircular shape or an arc shape matching with a circular fiber cable.

According to another exemplary embodiment of the present invention, the fiber boot fixing portion is configured to be a thread connection portion formed nearby the first end of the fiber fixing unit, and wherein an inner thread for matching with the thread connection portion is formed inside of the fiber boot.

According to another exemplary embodiment of the present invention, a notch is formed in the thread connection portion for accommodating a bent bared fiber of the fiber cable.

In various exemplary embodiments of the present invention, since the fiber optic connector is provided with elastic sheets, using which the operator can easily pinch the fiber while splicing the fibers. Furthermore, the fiber optic connector is provided with a groove, on which the fiber can rest and be temporarily fixed so that the fiber can remain steadily fixed when splicing the fibers. Moreover, the groove of the fiber optic connector is adapted to fix various fiber cables of different sizes. In an exemplary embodiment of the whole process of the splicing operation can be directly seen above the groove. The flat bottom of the groove can ensure the fiber cable to be smoothly guided in through a flat supporting surface.

### BRIEF DESCRIPTION OF THE DRAWINGS

The above and other features of the present invention will become more apparent by describing in detail exemplary embodiments thereof with reference to the accompanying drawings, in which:
Fig.1 is an illustrative perspective view of a fiber optic connector according to an exemplary embodiment of the present invention;
Fig.2 is an exploded perspective view of a fiber optic connector according to an exemplary embodiment of the present invention;
Fig.3 is a side view of a fiber fixing unit according to an exemplary embodiment of the present invention;
Fig.4 is a top view of a fiber fixing unit according to an exemplary embodiment of the present invention, wherein elastic sheets are in a loosened state;
Fig.5 is a top view of a fiber fixing unit according to an exemplary embodiment of the present invention, wherein elastic sheets are in a clamped state;
Fig.6 is an illustrative perspective view of a fiber fixing unit according to an exemplary embodiment of the present invention; and
Fig.7 is a cross section view of a fiber fixing unit according to an exemplary embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

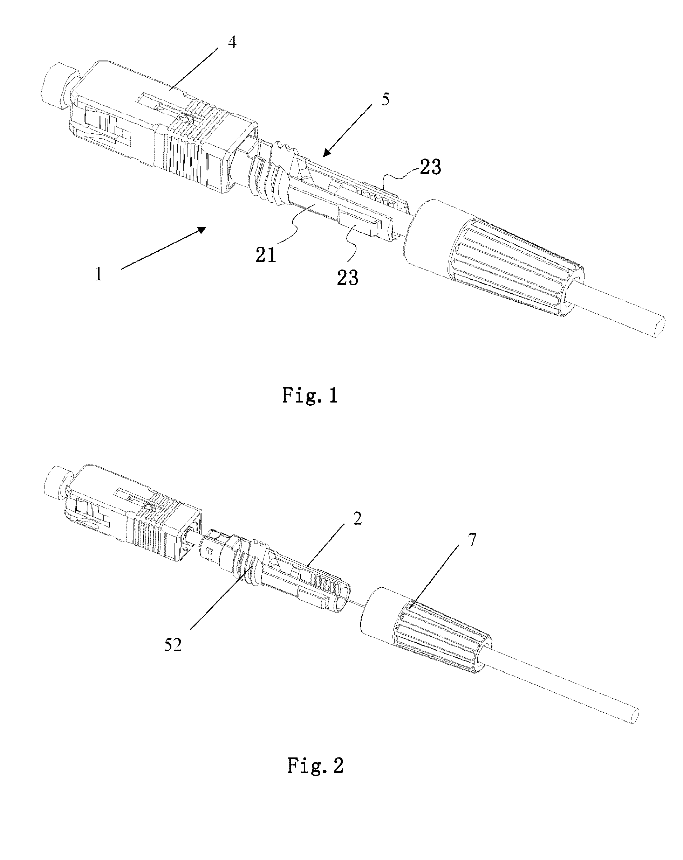

As shown in Figs.1-2, a fiber optic connector 1 according to an exemplary embodiment of the present invention mainly comprises a fiber splicing unit 4 for splicing two fibers, a fiber fixing unit 5 for fixing a part of a fiber cable to be spliced, and a fiber boot 7 coupled onto the fiber fixing unit 5. The fiber fixing unit has a fiber boot fixing portion 52 by which the fiber fixing unit 5 is coupled to the fiber boot 7. A first end of the fiber fixing unit 5 is connected with the fiber splicing unit 4, a second end of the fiber fixing unit 5 is provided with a groove 2 for receiving a fiber cable to be spliced. A fiber cable fixing portion for fixing the fiber cable is provided on the groove 2.

The fiber cable fixing portion comprises elastic portions provided at both sides of the groove. The elastic portions are deformable towards inside of the groove by an external force so as to press the fiber cable and fix an end of the fiber cable in the fiber fixing unit 5.

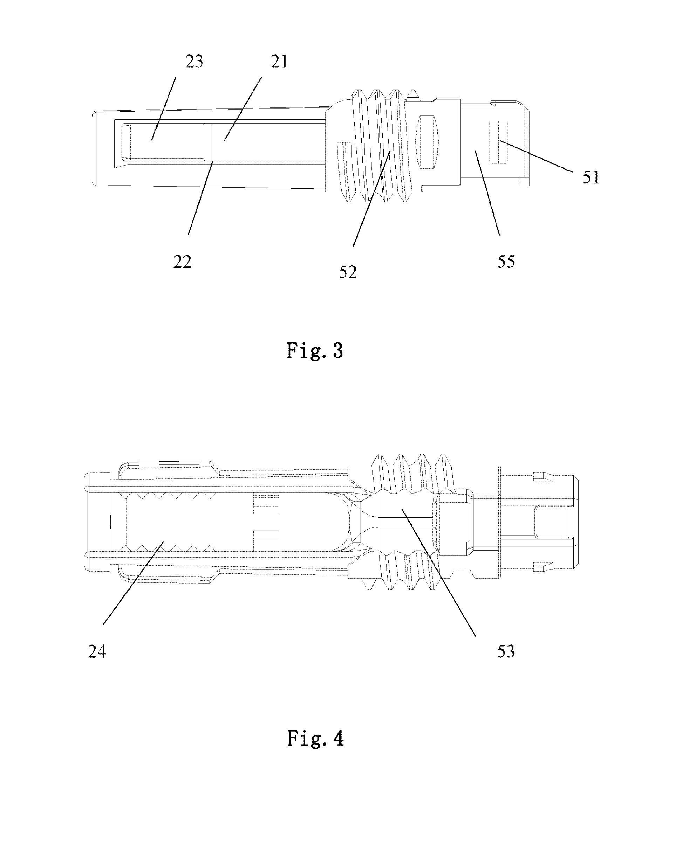

As shown in Figs.3-4, a window 22 is formed in each of opposite sides of the groove 2, and the elastic portion is configured to be an elastic sheet 21 extending from one side to the other side of the window 22 in an axial direction. Preferably, the elastic sheet 21 is integrally formed with the rest of the fiber fixing unit 5, that is, the elastic sheet 21 and the fiber fixing unit 5 are formed into one piece by, for example, molding. Accordingly, the elastic sheet 21 is configured to be a tongue-like piece in the window 22. A protrusion 23 is formed on an outer surface of the elastic portion. In another word, the elastic sheet 21 is configured to be an elongated piece having a free end on which the protrusion 23 is formed, for facilitating an operator to hold it by hands.

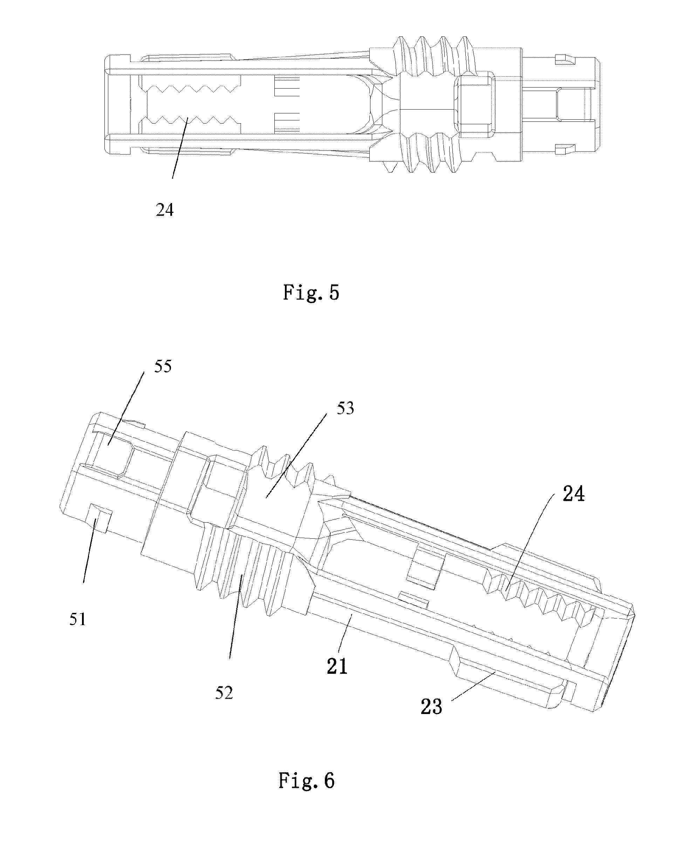

Fig.4 is a top view of the fiber fixing unit, wherein elastic sheets 21 are in a loosened state; and Fig.5 is a top view of the fiber fixing unit, wherein elastic sheets 21 are in a clamped state. As shown in Figs.4-5, the space between two opposite elastic sheets 21 is narrowed to tightly clamp the fiber cable when the elastic sheets 21 are pressed by an external force.

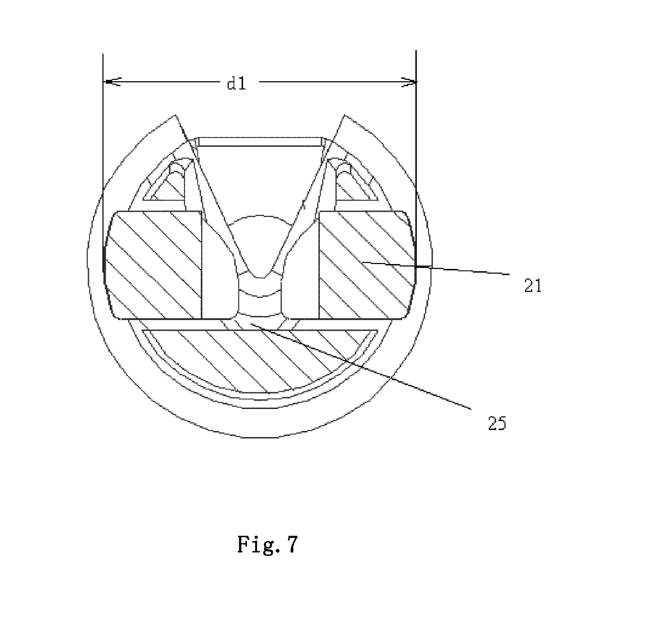

As shown in Fig.6 and Fig.7, an outer diameter d1 of at least a part of the protrusion 23 is larger than an inner diameter of the fiber boot 7. Furthermore, the protrusion 23 has a trapezoid cross section in a horizontal direction, and a bevel edge of the protrusion 23 facing the fiber boot 7 is formed as a guide surface. When assembling the fiber optic connector, the fiber boot 7 slides on the guide surface and is coupled onto the fiber fixing unit 5.

The fiber fixing portion comprises a plurality of embossments 24 provided on an inner wall of the groove 2 and protruded toward inside of the groove 2. The plurality of embossments 24 are arranged in a toothed form. When the elastic sheets 21 clamp the fiber cable, the toothed embossments 24 can reliably hold and fix the fiber cable.

The bottom 25 of the groove 2 may have a shape matched with the shape of the fiber cable to be spliced. For instance, if the fiber cable to be spliced has a substantially circular shape, the bottom 25 of the groove 2 has a radial cross section with a semicircular shape or an arc shape corresponding to the circular fiber cable. If the fiber cable to be spliced is shaped in 8 or a tape, the bottom 25 of the groove 2 is preferred to be flat. As shown in Fig.7, the bottom 25 of the groove 2 may be constructed to not only support an 8-like fiber cable, but also support a circular fiber cable. The fiber cable extends over the platform-shaped bottom 25 and is supported by it so that the fiber cable cannot fall down before being clamped, facilitating the operation in use.

As shown in Fig.1 and Fig.2, the fiber boot fixing portion 52 is configured to be a thread connection portion formed on a location near the first end of the fiber fixing unit 5. An inner thread for fitting with the thread connection portion is formed inside of the fiber boot 7. The fiber cable is fixed on the fiber fixing unit 5 by the fiber boot 7 after completing the splicing operation with the fiber splicing unit 4.

As shown in Fig.4, a notch 53 is formed in the thread connection portion 52, and a bared fiber obtained by peeling off a protection layer of the fiber cable is adapted to be bent into the notch 53. The notch 53 is communicated with the groove 2. The bottom of the notch 53 is higher than the platform-shaped bottom 25 of the groove 2. When the fiber cable is inserted into the groove 2, the fiber cable with the protection layer is limited at a location near the notch 53, and the bared fiber may be bent within the notch 53 with an external pushing force. Furthermore, an operator can see whether the bared fiber is bent above the notch 53.

As shown in Fig.6, an insertion fitting end 55 is formed at the other end of the fiber fixing unit 5 opposite to the groove 2. The thread connection portion 52 is located between the insertion fitting end 55 and the groove 2. The insertion fitting end 55 is inserted into an insertion hole of the fiber splicing unit 4. A fastener structure maybe provided between the fiber fixing unit 5 and the fiber splicing unit 4. For example, a pair of fitting holes may be formed in opposite sides of the fiber splicing unit 4, and a pair of protrusions 51 may be formed on the insertion fitting end 55 so as to be fitted in the pair of fitting holes.

An operation method of the fiber optic connector according to the present invention will be described in detail. The operation method mainly comprises the following steps of:
Firstly, peeling off a length of protection layer of a fiber cable to expose a length of bared fiber to be spliced;
Secondly, inserting the bared fiber through the fiber fixing unit 5 and further putting forward the bared fiber;
Thirdly, clamping the protrusions 23 of the elastic sheets 21 protruded outside of the windows 22 to hold the fiber cable with the protection layer on the embossments 24 of the groove 2 and forcing the bared fiber to be bent inside the fiber fixing unit 5, at this time, an operator can simply know if the bared fiber is bent by directly watching above the groove 2 and through the notch 53 above the thread connection portion 52 so as to splice the fibers well;
Fourthly, after the fibers have been spliced, loosening the protrusions 23 to loosen the bent fiber, screwing the fiber boot 7 onto the fiber fixing unit 5 and fixing Kevlar elements of the fiber cable on the fiber fixing unit 5 with the thread connection portion so that the fiber cable is finally fixed on the fiber fixing unit 5; and
Finally, mounting a case and a protection shield to complete the whole assembling operation of the fiber optic connector.

When splicing a circular fiber cable, the circular fiber cable may be placed in a space formed by the groove. When splicing an 8-like fiber cable, the 8-like fiber cable maybe placed in the space formed by the groove after shearing off a skin from the 8-like fiber cable.

Although several exemplary embodiments have been shown and described, it would be appreciated by those skilled in the art that various changes or modifications may be made in these embodiments without departing from the appended claims.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A fiber optic connector comprising a fiber splicing unit (4), a fiber fixing unit (5) and a fiber boot (7),
wherein the fiber fixing unit has a fiber boot fixing portion (52) by which the fiber fixing unit is coupled to the fiber boot,
a first end of the fiber fixing unit is connected with the fiber splicing unit, a second end of the fiber fixing unit is provided with a groove (2) for receiving a fiber cable to be spliced, and
a fiber cable fixing portion for fixing the fiber cable is provided on the groove,
wherein the fiber cable fixing portion comprises elastic portions (21) provided at both sides of the groove, wherein the elastic portions are deformable towards inside of the groove by an external force so as to press the fiber cable,
wherein a window (22) is formed in each of opposite sides of the groove for accommodating the elastic portion, and
wherein the elastic portion is configured to be an elastic sheet extending from one side towards the other side of the window.

2. The fiber optic connector according to claim 1, wherein the elastic sheet (21) is configured to be a tongue-like piece in the window (22).

3. The fiber optic connector according to claim 1 or 2, wherein a protrusion (23) is formed on an outer surface of the elastic portion (21).

4. The fiber optic connector according to claim 3,
wherein an outer diameter (d1) of at least a part of the protrusion is larger than an inner diameter of the fiber boot.

5. The fiber optic connector according to claim 1, wherein the elastic sheet is integrally formed with the rest of the fiber fixing unit.

6. The fiber optic connector according to claim 4, wherein the elastic sheet is configured to be an elongated piece having a free end on which a protrusion (23) is formed.

7. The fiber optic connector according to claim 6, wherein the protrusion (23) protrudes outside of the window (22).

8. The fiber optic connector according to claim 6 or 7,
wherein the protrusion has a trapezoid cross section in a horizontal direction, and
wherein a bevel edge of the protrusion is formed as a guide face for guiding the fiber boot to slide through it and be coupled onto the fiber fixing unit.

9. The fiber optic connector according to any one of claims 1-8,
wherein the fiber fixing portion comprises a plurality of embossments (24) protruded from an inner wall of the groove towards inside of the groove.

10. The fiber optic connector according to claim 9, wherein the plurality of embossments (24) are arranged in tooth form.

11. The fiber optic connector according to claim 1, wherein the groove has a flat bottom.

12. The fiber optic connector according to claim 1,
wherein a bottom of the groove has a radial cross section with a semicircular shape or an arc shape matching to a circular fiber cable.

13. The fiber optic connector according to claim 1,
wherein the fiber boot fixing portion is configured to be a thread connection portion formed nearby the first end of the fiber fixing unit, and
wherein an inner thread for matching with the thread connection portion is formed inside of the fiber boot.

14. The fiber optic connector according to claim 11,
wherein a notch (53) is formed in the thread connection portion for accommodating a bent bared fiber of the fiber cable.

## Patentansprüche

1. Faseroptischer Verbinder umfassend eine Faserspleißeinheit (4), eine Faserfixiereinheit (5) und eine Fasertülle (7), wobei die Faserfixiereinheit einen Fasertüllenfixierabschnitt (25) aufweist, durch die die Faserfixiereinheit mit der Fasertülle verbunden ist, wobei ein erstes Ende der Faserfixiereinheit mit der Faserspleißeinheit verbunden ist, wobei ein zweites Ende der Faserfixiereinheit mit einer Rille (2) zur Aufnahme eines zu spleißenden Faserkabels versehen ist, und wobei ein Faserkabelfixierabschnitt elastische Abschnitte (21) an beiden Seiten der Rille umfasst, wobei die elastischen Abschnitte durch eine äußere Kraft in Richtung eines Inneren der Rille verformbar sind um das Faserkabel zu pressen, wobei in jeder von sich gegenüberliegenden Seiten der Rille ein Fenster (22) gebildet ist, welches den elastischen Abschnitt beherbergt, und wobei der elastische Abschnitt durch eine elastische Platte gebildet ist, die sich von einer Seite des Fensters in Richtung auf die andere Seite des Fensters erstreckt.

2. Faseroptischer Verbinder nach Anspruch 1, wobei die elastische Platte (21) als zungenartiges Teil im Fenster (22) ausgebildet ist.

3. Faseroptischer Verbinder nach Anspruch oder 2, wobei ein Vorsprung (23) auf einer Außenseite der elastischen Platte (21) gebildet ist.

4. Faseroptischer Verbinder nach Anspruch 3, wobei ein äußerer Durchmesser (d1) von wenigstens einem Teil des Vorsprungs größer ist als ein innerer Durchmesser der Fasertülle.

5. Faseroptischer Verbinder nach Anspruch 1, wobei die elastische Platte einstückig mit der übrigen Faserfixiereinheit gebildet ist.

6. Faseroptischer Verbinder nach Anspruch 4, wobei die elastische Platte als längliches Teil gebildet ist, an dessen freien Ende ein Vorsprung (23) gebildet ist.

7. Faseroptischer Verbinder nach Anspruch 6, wobei der Vorsprung (23) an einer Außenseite des Fensters (22) vorspringt.

8. Faseroptischer Verbinder nach Anspruch 6 oder 7, wobei der Vorsprung in einer Horizontalrichtung einen trapezförmigen Querschnitt aufweist, und wobei eine Schrägkante des Vorsprungs als Führungsfläche zur Führung der Fasertülle gebildet ist, um durch diese hindurch zu gleiten und mit der Faserfixiereinheit verbunden zu werden.

9. Faseroptischer Verbinder nach einem der Ansprüche 1 bis 8, wobei der Faserfixierabschnitt eine Mehrzahl von Erhebungen (24) aufweist, die von einer Innenwand der Rille in Richtung auf das Innere der Rille vorspringen.

10. Faseroptischer Verbinder nach Anspruch 9, wobei die Mehrzahl von Erhebungen (24) zahnförmig ausgebildet ist.

11. Faseroptischer Verbinder nach Anspruch 1, wobei die Rille einen flachen Grund aufweist.

12. Faseroptischer Verbinder nach Anspruch 1, wobei ein Grund der Rille einen runden Querschnitt mit einer halbkreisartigen oder einer bogenartigen Form aufweist, welche an ein rundes Faserkabel passt.

13. Faseroptischer Verbinder nach Anspruch 1, wobei der Fasertüllenfixierabschnitt als Gewindeverbindungsabschnitt in der Nähe des ersten Endes der Faserfixiereinheit gebildet ist, und wobei ein Innengewinde passend zum Gewindeverbindungsabschnitt an der Innenseite der Fasertülle gebildet ist.

14. Faseroptischer Verbinder nach Anspruch 11, wobei eine Kerbe (53) in dem Gewindeverbindungsabschnitt zur Aufnahme einer gebogenen, abisolierten Faser des Faserkabels ausgebildet ist.

## Revendications

1. Connecteur de fibres optiques comprenant une unité d'épissure de fibres (4), une unité de fixation de fibres (5) et une botte de fibres (7),
dans lequel l'unité de fixation de fibres a une partie de fixation de botte de fibres (52) par laquelle l'unité de fixation de fibres est couplée à la botte de fibres,
une première extrémité de l'unité de fixation de fibres est connectée à l'unité d'épissure de fibres, une deuxième extrémité de l'unité de fixation de fibres est prévue avec une rainure (2) pour recevoir un câble de fibres à épisser, et une partie de fixation de câble de fibres pour fixer le câble de fibres est prévue sur la rainure,
dans lequel la partie de fixation de câble de fibres comprend des parties élastiques (21) prévues au niveau des deux côtés de la rainure, dans lequel les parties élastiques sont déformables vers l'intérieur de la rainure par une force extérieure de manière à exercer une pression sur le câble de fibres,
dans lequel une fenêtre (22) est formée dans chacun de côtés opposés de la rainure pour loger la partie élastique, et
dans lequel la partie élastique est configurée pour être une feuille élastique s'étendant depuis un côté vers l'autre côté de la fenêtre.

2. Connecteur de fibres optiques selon la revendication 1, dans lequel la feuille élastique (21) est configurée pour être une pièce en forme de languette dans la fenêtre (22).

3. Connecteur de fibres optiques selon la revendication 1 ou 2, dans lequel une saillie (23) est formée sur une surface extérieure de la partie élastique (21).

4. Connecteur de fibres optiques selon la revendication 3,
dans lequel un diamètre extérieur (d1) d'au moins une partie de la saillie est supérieur à un diamètre intérieur de la botte de fibres.

5. Connecteur de fibres optiques selon la revendication 1, dans lequel la feuille élastique est formée intégralement avec le reste de l'unité de fixation de fibres.

6. Connecteur de fibres optiques selon la revendication 4, dans lequel la feuille élastique est configurée pour être une pièce oblongue ayant une extrémité libre sur laquelle est formée une saillie (23).

7. Connecteur de fibres optiques selon la revendication 6, dans lequel la saillie (23) fait saillie à l'extérieur de la fenêtre (22).

8. Connecteur de fibres optiques selon la revendication 6 ou 7,
dans lequel la saillie a une section transversale trapézoïdale dans une direction horizontale, et
dans lequel un bord en biseau de la saillie est formé comme une face de guidage pour guider la botte de fibres pour glisser à travers celle-ci et être couplée à l'unité de fixation de fibres.

9. Connecteur de fibres optiques selon l'une quelconque des revendications 1 à 8,
dans lequel la partie de fixation de fibres comprend une pluralité de bossages (24) faisant saillie depuis une paroi intérieure de la rainure vers l'intérieur de la rainure.

10. Connecteur de fibres optiques selon la revendication 9, dans lequel la pluralité de bossages (24) est disposée en forme de denture.

11. Connecteur de fibres optiques selon la revendication 1, dans lequel la rainure a un fond plat.

12. Connecteur de fibres optiques selon la revendication 1,
dans lequel un fond de la rainure a une section transversale radiale avec une forme semi-circulaire ou une forme d'arc correspondante à un câble de fibres circulaire.

13. Connecteur de fibres optiques selon la revendication 1,
dans lequel la partie de fixation de botte de fibres est configurée pour être une partie de connexion filetée formée à proximité de la première extrémité de l'unité de fixation de fibres, et
dans lequel un filetage intérieur pour correspondre avec la partie de connexion filetée est formé à l'intérieur de la botte de fibres.

14. Connecteur de fibres optiques selon la revendication 11,
dans lequel une encoche (53) est formée dans la partie de connexion filetée pour loger une fibre dénudée courbée du câble de fibres.
